# FASCICULE DE BREVET EUROPEEN

(11) **EP 1 497 022 B1**
(45) Date de publication et mention de la délivrance du brevet: **28.02.2007**
(21) Numéro de dépôt: 03747146.3
(22) Date de dépôt: 17.04.2003
(51) Int. Cl.: B01J 13/16, B01J 45/00

(54) **CAPSULES COMPOSITES COMPLEXANTES**
KOMPLEXIERENDE VERBUNDKAPSELN
COMPLEXING COMPOSITE CAPSULES

(30) Priorité: 23.04.2002 FR 0205096
(43) Date de publication de la demande: 19.01.2005
(73) Titulaire: CENTRE NATIONAL DE LA RECHERCHE SCIENTIFIQUE (CNRS), 75016 Paris (FR)
(72) Inventeur: FRERE, Yves, F-67810 Holtzheim (FR); DANICHER, Louis, F-67200 Strasbourg (FR)
(74) Mandataire: Colombet, Alain André
(86) Numéro de dépôt international: PCT/FR2003/001246
(87) Numéro de publication internationale: WO 2003/090921

(56) Documents cités:
- FR-A- 2 612 400
- US-A- 4 948 506
- ASAKI M ET AL: "POLYAMIDE MICROCAPSULES CONTAINING ALGINIC ACID: EXTRACTABILITY OF METAL IONS AND SURFACE CHARACTERIZATION BY XPS" , JOURNAL OF MICROENCAPSULATION, TAYLOR AND FRANCIS INC. LONDON, GB, VOL. 15, NR. 4, PAGE(S) 453-463 XP000753298 ISSN: 0265-2048 le document en entier

## Description

La présente invention concerne des capsules à structure composite constituées d'une membrane polymère et d'un coeur comprenant un polymère complexant, leur procédé de préparation et leurs diverses applications comme agents de complexation, décomplexation et séparation.

Les domaines techniques dans lesquels il est nécessaire de pouvoir complexer, décomplexer ou encore séparer des entités chimiques, sont depuis de nombreuses années, aussi nombreux que divers. On peut ainsi par exemple citer les techniques de séparation par chromatographie comprenant une phase solide, généralement de la silice ou encore des résines fonctionnalisées qui permettent de retenir et libérer sélectivement les différents constituants d'un mélange de produits.

Or, il est bien connu que soit la silice, soit les résines sont utilisables pour la séparation d'une diversité limitée de composés et sont peu adaptées à la séparation, par exemple, de cations ou d'anions métalliques. Malgré cela, certaines techniques ont été mises au point ; elles ne sont cependant, pour diverses raisons, pas totalement satisfaisantes.

Parmi ces techniques, l'utilisation de billes de polymère de l'acide acrylique sous forme de gel est déjà connue (cf. A. Laguécir et coll., *Eur. Polym. J*., **38**, (2002), 977-981). Cependant, les billes qui possèdent un bon pouvoir complexant des cations métalliques n'ont pas une bonne tenue mécanique du fait de leur faible teneur en réticulant. En revanche, celles qui possèdent une bonne tenue mécanique (forte teneur en réticulant) n'ont pas un bon pouvoir complexant. En outre, les billes voient leur volume modifié durant les cycles de complexation/décomplexation.

De plus, le poly(acide acrylique) possède un faible pouvoir complexant vis-à-vis notamment des alcalins et alcalino-terreux, ce qui en fait un composé peu polyvalent, limité à des usages très spécifiques.

Parmi d'autres agents complexants qui sont également très largement utilisés, on peut citer les ligands complexants, dont les représentants les plus connus sont les éthers-couronne, pour ne citer que ceux-ci. Ces éthers-couronne sont aujourd'hui principalement utilisés en tant que tels pour leurs propriétés intrinsèques dans des systèmes d'extraction liquide-liquide. Un des inconvénients de cette méthode est qu'il n'est pas aisé de manipuler et récupérer les éthers-couronne lorsqu'ils sont sous leur forme liquide.

On connaît également la chromatographie liquide d'élution utilisant comme phase stationnaire des résines obtenues par greffage d'un éther-couronne sur un support soit organique (billes de polystyrène : cf. G. Zirnhelt et coll., Sep. *Sci. Technol., **28*** (1993), 2419-2429 ; ou de polyacrylate réticulé) soit minéral (particules de silice macro- ou micro-poreuse : cf. M. Lauth, thèse de l'Université Louis Pasteur, Strasbourg, 14 septembre 1984).

Cependant, si la densité d'éthers-couronne greffés sur le support et le caractère hydrophile des billes obtenues s'avèrent généralement suffisants pour avoir une séparation par chromatographie acceptable, celle-ci peut être grandement améliorée par le choix d'un autre support original.

En effet, les éthers-couronne, et autres ligands assimilés, possèdent des propriétés complexantes tout à fait intéressantes, permettant, s'ils étaient de manipulation plus aisée et surtout sous forme plus concentrée, leur utilisation dans des domaines aussi variés que la décontamination de l'air ou des sols, jusqu'en médecine humaine, comme les décontaminations du sang, de la thyroïde ou encore comme composants de produits d'imagerie médicale, cette liste n'étant toutefois ni limitative ni exhaustive.

Par ailleurs, il existe des techniques connues permettant l'isolation, ou encore la rétention, d'une substance active du milieu qui l'environne. Les techniques de rétention de substances actives sont par exemple des méthodes qui consistent à préparer des particules individualisées constituées d'un matériau enrobant la dite substance. Ces particules présentent des tailles comprises entre quelques nanomètres et quelques millimètres. Parmi celles-ci figurent des particules réservoirs constituées d'une membrane solide continue qui enveloppe un coeur rempli de matière active. Ces particules réservoirs sont dénommées capsules.

Le terme "produit encapsulé" indique qu'un produit est enfermé, à l'état solide ou liquide voire gazeux, seul ou en combinaison avec des agents de formulation, dans un corps creux, la capsule, afin de l'isoler du milieu extérieur.

La capsule est donc généralement constituée d'une membrane dont le rôle est, d'une part d'isoler la substance active du milieu extérieur, et d'autre part de permettre une meilleure conservation de la dite substance active, voire une vectorisation et/ou une libération immédiate, prolongée, retardée et/ou contrôlée de cette substance active encapsulée dans les usages classiques qui sont faits des produits encapsulés.

De nombreuses techniques d'encapsulation sont déjà connues et notamment la synthèse de capsules par enrobage ou coacervation, technique faisant appel à l'utilisation d'un polymère comme agent d'enrobage avec les limites de solubilité propres à celui-ci (voir par exemple le brevet US 2,800,457).

D'autres techniques font appel à la polymérisation en émulsion, la synthèse de particules pleines, la synthèse de vésicules, ou encore la synthèse de capsules par lit fluidisé, par enrobage ou par "spraying".

Une autre technique, enfin, fait appel à la technique de polycondensation interfaciale en milieu dispersé, technique divulguée, par exemple par P. W. Morgan et coll., *J. Polym. Sci.,* **40,** (1959), 299-327, pour la synthèse de films plans. Cette technique a été adaptée à la synthèse de capsules (R. Arshady, *J*. *Microencap.,* **6**(1), (1989), 1-10 et 13-28).

Cette dernière technique conduit à des capsules possédant une résistance mécanique adaptée et suffisante pour de nombreuses applications, et notamment pour la réalisation de colonnes de chromatographie. La membrane de ces capsules est constituée d'un polymère poreux, autorisant ainsi facilement les échanges de matières entre le milieu extérieur et le coeur de la capsule.

C'est précisément cet effet qui est recherché, par exemple pour les utilisations dans le domaine thérapeutique : une substance active du point de vue pharmacologique est ainsi libérée dans l'organisme à traiter, de manière retardée, contrôlée ou encore prolongée. Ceci représente cependant un inconvénient lorsque l'on souhaite conserver, à l'intérieur de la capsule, un agent, par exemple complexant comme des éthers-couronne.

Un premier objectif de la présente invention consiste à obvier l'ensemble des inconvénients liés aux différentes techniques proposées dans l'art antérieur exposé précédemment.

Ainsi, un des objectifs de la présente invention consiste à fournir des matériaux à fort pouvoir complexant et aisément manipulables.

Un autre objectif encore est de proposer des matériaux complexants, aisément manipulables, à fort pouvoir complexant, et dont la structure reste substantiellement inchangée et ne varie pas ou faiblement lorsqu'ils sont utilisés, notamment durant de nombreux cycles de complexation/décomplexation.

La présente invention a également pour objectif de fournir des matériaux complexants à large spectre, c'est-à-dire possédant un fort pouvoir complexant pour un grand nombre d'espèces chimiques, telles que par exemple des cations ou des anions métalliques, alcalins et alcalino-terreux, ainsi que leurs isotopes.

Un autre objectif consiste également à proposer des matériaux complexants qui soient mécaniquement stables et destinés à la séparation sélective d'ions métalliques.

Un autre objectif de la présente invention consiste à fournir des matériaux complexants sous une forme faiblement, voire non toxique pour l'homme et l'environnement.

D'autres objectifs encore, en plus de ceux exposés ci-dessus, apparaîtront dans l'exposé de l'invention qui suit.

Ainsi, la présente invention a tout d'abord pour objet des capsules composites complexantes, caractérisées en ce qu'elles sont essentiellement constituées :
a) d'un coeur comprenant des agents aptes à complexer et/ou décomplexer des entités chimiques, lesdits agents étant fonctionnalisés par un ou plusieurs monomères ayant subi une polymérisation ; et
b) d'une membrane polymère formée par polycondensation d'au moins deux monomères, ladite membrane renfermant ledit coeur et étant perméable auxdites entités chimiques.

Les capsules composites selon l'invention sont avantageusement obtenues par polycondensation interfaciale en milieu dispersé (PCI). Ce type de préparation permet d'obtenir des capsules possédant la tenue mécanique requise aux applications envisagées dans le cadre de la présente invention. Les membranes des capsules obtenues selon ce procédé offrent également un degré de porosité optimal pour les dites applications.

En effet, ce procédé de polycondensation à l'interface de deux liquides consiste, d'une manière générale, à créer une dispersion d'un liquide dans un autre. Les deux liquides doivent être substantiellement non miscibles entre eux, comme par exemple une phase lipophobe et une phase lipophile, généralement une phase aqueuse et une phase organique respectivement, formant ainsi une phase continue (ou phase dispersante) et une phase dispersée.

Ainsi, pour former les capsules, une solution comprenant un monomère M₁, ainsi que la substance active complexante proprement dite, dissous dans un solvant S₁ est dispersée dans une solution comprenant un solvant S₂ ne contenant pas d'espèces réactives. Une fois la solution dispersée et stabilisée, le monomère M₂, soluble dans S₂, de la phase dispersante est ajouté. La réaction de condensation entre M₁ et M₂, éventuellement catalysée, se produit à l'interface de la phase dispersante et de la phase dispersée. On parle alors de polycondensation interfaciale.

Comme il a été dit auparavant, le principe de la polycondensation interfaciale consiste à effectuer une dispersion d'une solution dans une autre, les deux solutions étant non miscibles entre elles. Ainsi, S₁ est un solvant pour M₁, mais n'est pas substantiellement miscible dans S₂ qui est un solvant de M₂. Si S₁ est le solvant de la phase lipophobe, on aura une dispersion de S₁ dans S₂, c'est-à-dire de type eau-dans-huile (système inverse). À l'inverse, si S₁ est le solvant de la phase lipophile, on aura une dispersion de type huile-dans-eau (système direct).

Le choix entre système direct et système inverse sera principalement guidé par la nature de la substance active que l'on désire encapsuler. Ainsi, dans le cas d'agents complexants fonctionnalisés liposolubles, on préférera avantageusement réaliser une dispersion en système direct. En revanche, pour des agents complexants fonctionnalisés hydrosolubles, la dispersion en système inverse sera favorable. Bien entendu, l'utilisation de l'un ou l'autre des systèmes pourra varier selon la nature intrinsèque des agents complexants à encapsuler.

Pour obtenir des capsules par polymérisation interfaciale en milieu dispersé, il est donc nécessaire de réaliser tout d'abord une dispersion. Ceci nécessite l'emploi de deux solvants, substantiellement non miscibles entre eux et inertes vis-à-vis des monomères contenus dans chacune des phases. L'eau est habituellement utilisée comme solvant de la phase lipophobe qui sera par convention dénommée phase aqueuse dans la suite. L'eau brute peut être utilisée, mais l'eau stérilisée, distillée, permutée ou déionisée par passage sur résine échangeuse d'ions sera préférée cependant.

Le solvant de la phase lipophile est généralement choisi parmi les solvants organiques usuels, tels que le toluène, le cyclohexane, le tétrachlorure de carbone, le chloroforme, etc. C'est pourquoi, dans la suite de la description, cette phase lipophile sera dénommée phase organique.

Une solution particulièrement adaptée consiste à effectuer la réaction de polycondensation interfaciale à l'aide d'un solvant organique possédant les propriétés de solvatation requises pour une telle réaction, et qui puisse être facilement éliminé en fin de réaction. Un type de solvant tout à fait adapté est un solvant gazeux qui peut être amené à l'état liquide et/ou supercritque pendant la réaction de polycondensation interfaciale. Après la réaction et retour aux conditions normales de température et de pression, le dit solvant est ainsi éliminé sous forme de gaz.

Ainsi, les solvants appropriés pour la réaction de polycondensation interfaciale selon la présente invention comprennent en outre tous les composés gazeux possédant les propriétés de solvatation requises pour une telle réaction, inertes vis-à-vis de la réaction de polycondensation interfaciale proprement dite mais aussi des agents complexants, et se présentant sous forme liquide ou supercritique dans des conditions de température et/ou de pression spécifiques.

De tels composés gazeux sont par exemple l'air, l'oxygène, l'azote, le protoxyde d'azote, le dioxyde de carbone, les gaz rares, les hydrocarbures halogénés ou non, par exemple le propane, le butane, les composés fluorocarbonés et autres. Comme indiqués plus haut, ces composés sont gazeux dans les conditions normales de température et de pression. Des mélanges en toutes proportions de ces composés peuvent également être utilisés. Un composé gazeux tout particulièrement préféré est le dioxyde de carbone.

Un solvant organique tout particulièrement adapté, en raison de sa disponibilité et de son faible coût, lorsqu'il est souhaitable d'éviter toute trace de solvant résiduel dans les capsules est le dioxyde de carbone à l'état liquide et/ou supercritique. Le procédé de préparation de ces capsules exemptes de solvant organique est décrit de manière détaillée dans la demande de brevet non encore publiée n° FR 02 03939.

La taille des capsules obtenues par polycondensation interfaciale en milieu dispersé est directement liée à la taille des gouttelettes présentes dans la dispersion. La taille de ces dernières est elle-même influencée par de nombreux paramètres, dont les principaux sont la vitesse avec laquelle le milieu réactionnel est agité et dispersé et la durée de la dispersion, la nature et la concentration du tensioactif utilisé, la nature, la viscosité et le rapport volumique de chacune des phases dispersantes et dispersées, et enfin, la température à laquelle sont réalisées la dispersion et la réaction de polycondensation.

Grâce au contrôle des différents paramètres décrits ci-dessus, il est ainsi possible d'obtenir des gouttelettes dont la taille est substantiellement uniforme et par conséquent des particules de taille substantiellement uniforme. La taille des capsules peut donc être contrôlée de manière que le diamètre moyen soit sensiblement constant avec une dispersité relativement faible.

Ainsi, et selon les conditions opératoires définies plus haut, la présente invention consiste à fournir des capsules de tailles comprises entre quelques nanomètres et quelques millimètres. Dans la présente invention, on parlera de nanocapsules lorsque leur diamètre moyen est compris entre environ 0,05 µm et 0,9 µm, de microcapsules lorsque le diamètre moyen est compris entre environ 1 µm et 10 µm, de minicapsules pour un diamètre moyen compris entre environ 100 µm et environ 500 µm et de millicapsules pour des valeurs de diamètre moyen compris entre environ 0,5 mm et 5 mm.

Les capsules composites complexantes sont de préférence des microcapsules ou des minicapsules, c'est-à-dire des capsules ayant un diamètre compris entre environ 1 µm et environ 500 µm. De préférence encore, les capsules ont un diamètre moyen compris entre environ 100 µm et environ 300 µm.

Comme on le verra plus loin dans la description, la membrane de la capsule est généralement obtenue par polymérisation d'au moins deux monomères non miscibles entre eux. En effet, au moins un monomère doit être soluble/miscible dans la phase aqueuse, et au moins un autre monomère soluble/miscible dans la phase organique. De tels monomères sont bien connus de l'homme du métier et conduisent par exemple à la formation de membrane de polyamide, polyester, polyurée, polyuréthanne, poly(éther-uréthanne) et poly(éther-uréthanne-urée) ou un de leurs copolymères, pour ne citer que les plus connus d'entre eux.

Bien entendu, il doit être compris que le terme "monomère", employé ici dans ce contexte, comprend non seulement les monomères au sens propre, mais aussi les oligomères, télomères et autres, possédant des caractéristiques similaires à celles des monomères décrits ci-dessus et conduisant à des polymères constitutifs des membranes des capsules adaptés à la présente invention. Il peut être également envisagé d'utiliser des mélanges de monomères, oligomères, télomères et autres, ou encore de remplacer ou ajouter un monomère, oligomère, télomère ou autre, au cours de la réaction de polycondensation interfaciale.

De manière avantageuse, on préfère les capsules dont la membrane est un polymère polyamide, polyester, polyurée, polyuréthanne, poly(éther-uréthanne) et poly(éther-uréthanne-urée) ou un de leurs copolymères. Ces polymères sont choisis pour leur porosité aux différentes entités chimiques que l'on souhaite complexer, décomplexer et/ou séparer. Des capsules à membrane polyamide se sont avérées particulièrement satisfaisantes pour les utilisations prévues dans le cadre de la présente invention.

Ces polymères polyamide, polyester, polyurée, polyuréthanne, poly(éther-uréthanne) et poly(éther-uréthanne-urée) ou un de leurs copolymères possèdent également l'avantage, tout au moins pour certains d'entre eux, d'être non toxiques pour le milieu vivant humain, animal ou végétal, c'est-à-dire d'être biocompatibles. De telles capsules sont particulièrement adaptées à des usages dans les domaines médical, biomédical, vétérinaire, cosmétique et phytosanitaire.

Les capsules composites selon la présente invention possèdent par conséquent une membrane plus ou moins poreuse aux diverses entités chimiques que l'on souhaite complexer, décomplexer et/ou encore séparer. Le caractère complexant, décomplexant et/ou de séparation des capsules est obtenu grâce au coeur de la capsule qui comprend au moins un agent de complexation, décomplexation et/ou séparation.

Les agents aptes ou susceptibles de complexer, décomplexer et/ou séparer des entités chimiques sont choisis parmi les composés connus dans le domaine pour leur capacité à fixer et/ou libérer les métaux, les métaux alcalins ou alcalino-terreux et leurs isotopes, et les composés, minéraux ou organiques, ces entités chimiques pouvant se trouver sous forme neutre, anionique ou cationique.

Une classe tout à fait intéressante de tels agents complexants est constituée par les ligands complexants neutres ou ioniques. Les ligands complexants neutres peuvent être regroupés en trois classes :
1- les coronands, qui sont des composés monocycliques comportant au moins un, avantageusement au moins 3, de préférence au moins 4, atomes, identiques ou différents choisis parmi l'oxygène, l'azote, le soufre et le phosphore, un ou plusieurs, voire la totalité de ces atomes pouvant être remplacés par des radicaux hétérocycliques divalents ;
2- les cryptands, composés macrobicycliques, possédant deux atomes d'azote pontés par trois chaînons comportant au moins un, avantageusement au moins 2, de préférence au moins 3, atomes, identiques ou différents choisis parmi l'oxygène, l'azote, le soufre et le phosphore, un ou plusieurs, voire la totalité de ces atomes pouvant être remplacés par des radicaux hétérocycliques divalents ;
3- les pondands, qui sont généralement des polyéthers acycliques sont essentiellement caractérisés par le fait qu'ils contiennent des groupements terminaux donneurs, par exemple de type quinoleine, methoxyphenol ou encore nitrophénol.

Une sous classe de coronands particulièrement étudiée et connue est constituée par les éthers-couronne, dont un représentant est le coronand 18-C-6, encore appelé éther-couronne 18-C-6, dont la structure est présentée ci-dessous :

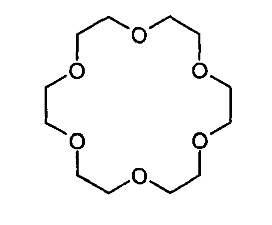

À titre d'exemple, un représentant de la classe des cryptands est le cryptand 222B de structure :

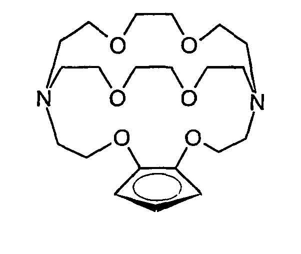

Enfin, un exemple de ligand complexant neutre de la classe des pondands est le pondand CPOD, dont la structure est la suivante :

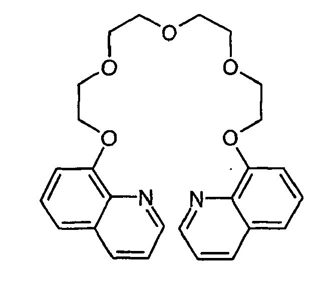

La publication de S. Kiviniemi, "Complexation of N-heteroaromatic cations with crown ethers and tetraphenylborate", (2001), disponible sur internet à l'adresse http://herkules.oulu.fi/isbn9514259971/, fournit d'autres exemples de ligands également acceptables pour les usages de la présente invention. Bien entendu, tout autre type de molécules connues pour leur pouvoir complexant et/ou décomplexant d'entités chimiques au sens de la présente invention peut également convenir. On pourra par exemple se référer à l'ouvrage de J.-M. Lehn "La chimie supramoléculaire - Concepts et perspectives", édition De Boeck Université, Paris-Bruxelles, 1997.

Il convient toutefois de noter que toutes ces molécules complexantes, si elles sont utilisées en tant que telles, c'est-à-dire présentes en tant que telles dans le coeur de la capsule complexante selon l'invention, peuvent migrer de l'intérieur de la capsule vers l'extérieur de celle-ci, au travers des pores de la membrane. Ceci peut de produire notamment dans le cas où la taille des molécules complexantes est inférieure à la taille des pores de la membrane. Ceci aurait pour effet de conduire à plus ou moins long terme à des capsules vides, creuses, dénuées partiellement ou totalement d'effet complexant, et donc inadaptées pour les usages proposés ici.

II est donc nécessaire que ces divers agents complexants soient "piégés" à l'intérieur de la capsule, c'est-à-dire ne puissent pas migrer vers l'extérieur de la capsule à travers la membrane.

En réponse à cette problématique, une solution consiste à greffer sur des agents complexants et/ou décomplexants, tels que ceux définis ci-dessus, au moins un monomère polymérisable. Une fois ce ou ces monomère(s) polymérisé(s), le coeur de la capsule est ainsi constitué d'une chaîne polymère greffée par un grand nombre de sites complexants. De telles chaînes polymères greffées par des groupements complexants sont par exemple les poly(vinyl-éther-couronne) divulgués dans la demande brevet JP-A-62-284 348.

Grâce à ces chaînes de polymère complexant, une densité de sites complexants à l'intérieur des capsules tout à fait satisfaisante pour les utilisations de la présente invention peut ainsi être obtenue. La longueur des chaînes de polymère complexant devra avantageusement être suffisamment importante afin d'éviter une migration de ces chaînes au travers de la membrane vers l'extérieur de la capsule.

Pour les besoins de la présente invention, tout type de monomère polymérisable et fonctionnalisant au moins un site complexant choisi parmi les molécules complexantes définies précédemment peut convenir. De tels monomères peuvent faire l'objet de réactions d'homopolymérisation ou de copolymérisation, le co-monomère dans ce dernier cas pouvant éventuellement comporter lui aussi un ou plusieurs sites complexants.

Il peut également être avantageux de fonctionnaliser une partie seulement des agents complexants avec un radical polymérisable et une ou plusieurs autres parties des dits agents ou encore d'autres agents complexants avec un ou plusieurs autres radicaux polymérisables, identiques ou différents, de manière à obtenir, une fois la réaction de polymérisation effectuée des copolymères fonctionnalisés par des ligands, identiques ou différents entre eux.

Comme indiqué plus haut, il est important que le polymère complexant ne puisse pas migrer au travers de la membrane vers l'extérieur de la capsule. Pour répondre à cet objectif, la solution relative à la longueur des chaînes de polymère complexant préconisée précédemment peut être complétée ou substituée par une plus ou moins forte réticulation desdites chaînes, afin de former un réseau.

Cette réticulation peut être aisément obtenue selon des techniques classiques connues en soi, par exemple par ajout, lors de la polymérisation, d'un ou plusieurs agents de réticulation. Une autre méthode de réticulation peut également consister à polymériser des agents complexants fonctionnalisés par deux ou plus monomères. Il est bien entendu possible de combiner ces techniques de réticulation.

Il est possible de contrôler le degré de réticulation du polymère complexant de manière à obtenir des propriétés physiques, mécaniques adaptées. Le polymère complexant ainsi obtenu possède alors un degré de réticulation plus ou moins grand, conférant par exemple une plus grande rigidité du coeur de la capsule et supprimant le risque de migration des chaînes polymères complexantes vers l'extérieur des capsules.

Selon le degré de polymérisation et/ou de réticulation des monomères fonctionnalisés par un ou plusieurs agents complexants, les polymères complexants obtenus peuvent se présenter sous diverses formes. On préfère dans la présente invention les polymères complexants chimiquement réticulés. Cette structure permet de conserver le pouvoir complexant/décomplexant des ligands et leur sélectivité. La membrane possède alors les caractéristiques de tenue mécanique en conformité avec celles requises pour les usages auxquelles les capsules composites sont destinées.

Le monomère (ou oligomère, ou télomère ou autre) polymérisable qui vient fonctionnaliser les molécules complexantes est choisi parmi les monomères polymérisables, connus de l'homme du métier. Ce monomère sera de préférence choisi parmi ceux conduisant à des réactions d'homopolymérisation, ceci n'excluant cependant pas l'emploi de monomères différents résultant en des copolymères.

Des monomères polymérisables préférés sont en particulier ceux dont la réaction de polymérisation peut être amorcée, par voie radicalaire (chimique et/ou photochimique et/ou thermique), par exemple, les monomères comportant au moins une insaturation, de préférence vinylique. On préférera, pour la présente invention, des monomères possédant une fonction vinylique homopolymérisable par voie radicalaire.

À titre d'exemple, les monomères polymérisables utilisables dans le cadre de la présente invention sont les monomères provenant des hydrocarbures éthyléniques et de leurs dérivés, notamment ceux choisis de manière non limitative parmi l'éthylène, le propène, le chlorure de vinyle, le styrène, l'acrylonitrile, le méthacrylate de méthyle, l'acide acrylique, le butadiène, l'isoprène et le chloroprène. Les agents complexants tels que défini précédemment sont greffés par un ou plusieurs de ces monomères. En outre, il peut être envisagé que plus d'un, par exemple deux, monomères soient greffés sur un agent complexant.

Pour les besoins de la synthèse par polycondensation interfaciale en milieu dispersé, il est requis que l'agent complexant fonctionnalisé par au moins un monomère polymérisable soit soluble dans la phase dispersée. Ainsi, lorsque la synthèse de la capsule est réalisée en système direct, l'agent complexant fonctionnalisé par au moins un monomère polymérisable doit avoir un coefficient de solubilité dans la phase lipophile de la dispersion très supérieur à celui qu'il possède dans la phase lipophobe. Dans le cas d'une synthèse en système inverse, l'agent complexant fonctionnalisé par au moins un monomère polymérisable doit avoir un coefficient de solubilité dans la phase lipophobe de la dispersion très supérieur à celui qu'il possède dans la phase lipophile.

Lorsque les agents complexants fonctionnalisés avec au moins un monomère polymérisable ne possèdent pas la miscibilité requise dans l'une ou l'autre phase, il peut être avantageux d'y adjoindre une composante hydrophile ou lipophile. Cette adjonction peut par exemple être effectuée par une modification chimique du ou des monomères polymérisables greffés sur l'agent complexant ou encore par une modification de l'agent complexant lui-même.

À titre purement illustratif, un monomère comportant à la fois au moins une double liaison vinylique polymérisable par voie radicalaire, et au moins un groupement hydrophile est par exemple l'espèce acryloyloxyméthyle, comportant à la fois une double liaison vinylique polymérisable par voie radicalaire, et un groupement oxycarbonyle hydrophile.

De manière préférée, l'agent complexant est choisi dans la famille des coronands fonctionnalisés par au moins un monomère polymérisable, par exemple l'éther-couronne 18-C-6, substitué par un ou plusieurs radicaux acryloyloxyméthyle de formule (I) : 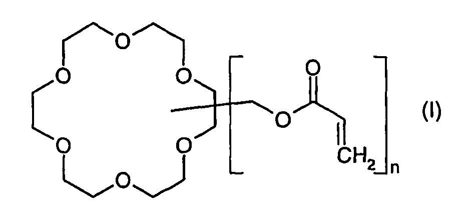 dans laquelle n représente un entier compris entre 1 et 12, (bornes incluses), de préférence entre 1 et 6, avantageusement n représente 1, 2 ou 3, mieux encore, n représente 1 ou 2.

Un agent complexant particulièrement préféré est l'acryloyloxyméthyl-18-couronne-6 (Composé A), décrit par exemple dans la demande de brevet JP-A-62-284 348, c'est-à-dire le composé de formule (I) ci-dessus où n représente 1 :

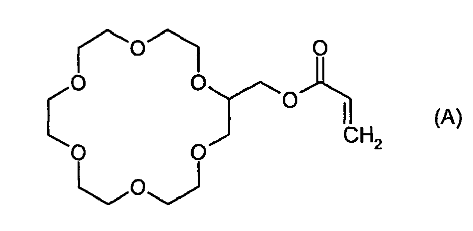

Ces composés peuvent être préparés selon divers procédés aisément accessibles par l'homme du métier. Les matières premières nécessaires à ces procédés sont facilement disponibles, soit commercialement, soit via des synthèses connues de l'homme du métier à partir de la littérature, des brevets, des bases de données informatiques ainsi que par internet.

À titre d'exemple, le composé (A) peut être aisément préparé à partir de l'hydroxyméthyl-18-couronne-6 (disponible chez Aldrich), sur lequel on fait réagir le chlorure d'acryloyle.

Les agents complexants ainsi fonctionnalisés sont aisément polymérisables. Le composé (A) défini ci-dessus est homopolymérisable, par exemple par voie radicalaire, et avantageusement réticulé à l'aide d'un agent de réticulation pour fournir un polymère chimiquement réticule.

L'agent de réticulation peut être de tout type connu dans le domaine de la polymérisation. Celui-ci a pour but de ponter entre elles les chaînes de polymère complexant, c'est-à-dire de créer un réseau plus ou moins dense de chaînes polymères comportant des sites complexants, reliées entre elles.

Ainsi, dans le cas d'un monomère comportant une fonction vinylique polymérisable par voie radicalaire, l'agent de réticulation est avantageusement choisi parmi les composés comportant au moins deux fonctions vinyliques, permettant également une réticulation par voie radicalaire. À titre d'exemple, lorsque le monomère est du type acide acrylique ou acide méthacrylique, l'agent de réticulation peut être le N,N'-méthylènebisacrylamide (MEBA).

Les agents complexants fonctionnalisés peuvent être polymérisés puis les chaînes de polymère éventuellement réticulées avant d'être encapsulés, ou bien encore, et selon le type de procédé retenu pour la préparation des capsules, pendant la synthèse des capsules elles-mêmes, ou encore après la formation des dites capsules.

De préférence, la synthèse de capsules composites complexantes selon la présente invention sera réalisée par polycondensation interfaciale en milieu dispersé, le polymère complexant formant le coeur de la capsule étant obtenu par polymérisation radicalaire de monomères *in situ* au sein de la capsule une fois formée ou bien lors de sa formation.

Ainsi, la présente invention consiste également à fournir un procédé de préparation de capsules composites complexantes, caractérisé en ce qu'il comprend les étapes suivantes :
- préparer sous agitation une dispersion stabilisée d'une phase P₁ comprenant une solution, dans au moins un solvant S₁, d'au moins un monomère M₁ et d'au moins un monomère M_{c} greffé sur au moins un agent complexant, éventuellement en présence d'un agent de réticulation, dans une phase P₂, comprenant au moins un solvant S₂ substantiellement non miscible dans P₁ et éventuellement un tensioactif compatible avec S₁ et S₂;
- ajouter le monomère M₂ miscible dans S₂ à cette dispersion stabilisée pour réaliser la polycondensation interfaciale et former des capsules renfermant le monomère greffé sur au moins un agent complexant ;
- réaliser la polymérisation du ou des monomères M_{c} fonctionnalisant au moins un agent complexant pour obtenir un polymère complexant, éventuellement soumis à réticulation, de manière à obtenir un polymère complexant chimiquement réticulé et encapsulé ;
- isoler les capsules composites complexantes ainsi obtenues.

Selon une variante, le procédé de préparation de capsules composites complexantes, caractérisé en ce qu'il comprend les étapes suivantes :
- préparer sous agitation une dispersion stabilisée d'une phase P₁ comprenant une solution, dans au moins un solvant S₁, d'au moins un monomère M₁ et d'au moins un monomère M_{c} greffé sur au moins un agent complexant, éventuellement en présence d'un agent de réticulation, dans une phase P₂, comprenant au moins un solvant S₂ substantiellement non miscible dans P₁, le monomère M₂ miscible dans S₂, et éventuellement un tensioactif compatible avec S₁ et S₂ ;
- réaliser la polycondensation interfaciale et simultanément la polymérisation radicalaire du ou des monomères M_{c} fonctionnalisant au moins un agent complexant, et éventuellement réticulation, pour obtenir un polymère complexant chimiquement réticulé et encapsulé ;
- isoler les capsules composites complexantes ainsi obtenues.

Le choix entre système direct et système inverse sera principalement guidé par la nature de l'agent complexant que l'on désire encapsuler. Ainsi, pour des agents complexants liposolubles, on préférera avantageusement réaliser une dispersion en système direct. En revanche, pour des agents complexants hydrosolubles, la dispersion en système inverse sera favorable. Bien entendu, l'utilisation de l'un ou l'autre des systèmes pourra varier selon la nature intrinsèque des agents complexants à encapsuler.

Le système inverse est le procédé de polycondensation interfaciale préféré selon l'invention. Dans un tel système inverse, la phase P₁ est la phase aqueuse dispersée dans la phase organique P₂. Dans ce cas, le monomère M₁ ainsi que le monomère M_{c} greffé sur au moins un agent complexant et éventuellement l'agent réticulant, seront miscibles au solvant lipophobe S₁, qui sera avantageusement l'eau. Le dit système inverse permet ainsi la préparation de capsules composites complexantes dont le coeur est un polymère, éventuellement chimiquement réticulé.

Les membranes des capsules seront ainsi formées par polycondensation d'au moins deux monomères M₁ et M₂ dont un est soluble dans la phase dispersante et un autre soluble dans la phase dispersée.

Ainsi, pour former les capsules, une solution comprenant un monomère M₁ dissous dans un solvant S₁ ainsi que le monomère M_{c} greffé sur l'agent complexant et éventuellement l'agent réticulant, est dispersée par agitation dans une solution comprenant un solvant S₂. Une fois la solution dispersée et stabilisée, et toujours sous agitation, le monomère M₂, soluble dans S₂, de la phase dispersante est ajouté. La réaction de condensation entre M₁ et M₂, éventuellement catalysée, se produit à l'interface de la phase dispersante et de la phase dispersée.

Selon l'alternative précitée, une solution comprenant un monomère M₁ dissous dans un solvant S₁ ainsi que le ou les monomère(s) M_{c} greffé(s) sur l'agent complexant, et éventuellement l'agent réticulant, est dispersée par agitation dans une solution comprenant un solvant S₂ et le monomère M₂. Une fois la solution dispersée et stabilisée, les réactions de condensation entre M₁ et M₂, éventuellement catalysée, et de polymérisation radicalaire du monomère M_{c} sont effectuées simultanément.

Le rapport volumique entre la phase P₁ et la phase P₂, c'est-à-dire entre la phase dispersée et la phase dispersante est en général compris entre 20/1 et 1/20, de préférence entre 10/1 et 1/10.

Dans le procédé de la présente invention, il est recommandé que la dispersion de la phase P₁ dans la phase P₂ soit stable, c'est-à-dire que le milieu réactionnel ne subisse pas de démixtion, de séparation, de décantation, etc. À cet effet, il est avantageux d'ajouter à la phase dispersante un agent tensioactif, qui peut être de tout type, ionique ou non ionique, et dont la caractéristique est de s'adsorber spontanément à l'interface des deux liquides.

De telles molécules adsorbées à l'interface forment une barrière stérique ou électrique empêchant ainsi la coalescence des gouttelettes puis des capsules en formation. De ce fait, l'agent tensioactif stabilisant la dispersion prévient l'agglomération entre elles des gouttelettes dispersées, qui deviendront les capsules, une fois la phase de croissance de la membrane terminée. Les tensioactifs seront avantageusement choisis parmi ceux ne provoquant pas d'interaction entre les différents monomères présents dans la dispersion. Des mélanges de tensioactifs peuvent également être utilisés. Un exemple tout particulièrement préféré de tensioactif adapté à la polycondensation interfaciale en milieu dispersé selon l'invention est l'HYPERMER® B261, commercialisé par ICI.

La réaction de polycondensation interfaciale est le plus souvent conduite dans les conditions normales de température et de pression. Il peut cependant être avantageux dans certains cas de chauffer ou de refroidir le milieu réactionnel, selon les conditions spécifiques requises pour la polycondensation ou la polymérisation du monomère complexant. Ces conditions sont connues ou facilement accessibles par l'homme du métier.

Des conditions particulières de température et de pressions sont par exemple requises, lorsqu'un gaz, par exemple le gaz carbonique, à l'état liquide et/ou supercritique, a été choisi comme solvant de la phase organique pour l'obtention de capsules biocompatibles (cf. demande non encore publiée n° FR 02 03939).

Les capsules composites complexantes selon la présente invention sont formées d'une membrane perméable à diverses entités chimiques. Une telle membrane est ici constituée d'un polymère obtenu par polycondensation d'au moins deux monomères M₁ et M₂.

Bien entendu, les monomères M₁ et M₂ doivent être choisis de telle sorte qu'ils puissent réagir entre eux pour former un polycondensat et être solubles, l'un dans la phase aqueuse, l'autre dans la phase organique.

De manière avantageuse, les monomères M₁ et M₂ sont des monomères au moins bi-fonctionnels, c'est-à-dire qu'ils comportent chacun au moins deux fonctions réactives, éventuellement différentes, de préférence identiques, par molécule. Cette bi-fonctionnalité assure la formation de polymères de haut poids moléculaire, particulièrement adaptés à la formation des capsules dans le système interfacial de l'invention.

La présence de monomères mono-fonctionnels peut en effet réduire voire stopper la croissance des chaînes de polymère, avant qu'elles aient atteint la longueur adaptée à la formation des capsules. À l'inverse, des monomères poly-fonctionnalisés se comporteront comme des agents de réticulation, entraînant ainsi un accroissement très rapide de la masse moléculaire du polymère formé, la formation d'un réseau tridimensionnel et bien souvent la précipitation de la macromolécule.

De tels monomères monofonctionnels et polyfonctionnels peuvent toutefois être utilisés pour la synthèse des capsules de la présente invention. En particulier, des monomères polyfonctionnels pourront avantageusement être utilisés comme agent de réticulation, afin d'accélérer et/ou de promouvoir la formation de la membrane polymère.

De plus, et si l'on souhaite rester en adéquation avec le caractère biocompatible des capsules exposées ici, il est avantageux que le copolymère obtenu à partir des monomères M₁ et M₂, et qui forme la membrane desdites capsules, soit non toxique, biocompatible et/ou bioassimilable pour les usages auxquels elles sont destinées. Cette même biocompatibilité et/ou bioassimilation devra également être observée pour les produits de dégradation du polymère, dégradation qui peut par exemple intervenir par dégradation chimique ou biochimique (métabolisation).

On utilisera ainsi des monomères conduisant par exemple à des polymères choisis parmi les polyamides, les polyesters, les polyuréthannes, les polyurées, les poly(éther-uréthanne)s et les poly(éther-uréthanne-urée)s, ainsi que leurs copolymères.

Ces polymères, constitutifs de la membrane des capsules, peuvent être obtenus avec les couples de monomères suivants :

| ***Monomère "aqueux"*** | ***Monomère "organiques"*** | ***Polymère obtenu*** |
|---|---|---|
| Diol | Dichlorure d'acide | Polyester |
| Diol | Diisocyanate | Polyuréthanne |
| Diol | Polyéther fonctionnalisé en diisocyanate | Poly(éther-uréthanne) |
| Diamine | Dichlorure d'acide | Polyamide |
| Diamine | Diisocyanate | Polyurée |
| Diamine | Polyéther fonctionnalisé en diisocyanate | Poly(éther-uréthanne-urée) |

De manière non limitative, les monomères "organiques" (c'est-à-dire liposolubles, ou encore solubles dans la phase organique, ou encore solubles dans le dioxyde de carbone à l'état liquide et/ou supercritique) et qui peuvent être avantageusement utilisés dans le cadre de la présente invention, sont par exemple choisis parmi les diisocyanates, par exemple le méthylène diphénylisocyanate (MDI), le 4,4'-dicyclohexylméthanediisocyanate (H₁₂MDI), le toluènediisocyanate (TDI), le poly(1,4-butanedioltoluènediisocyanate) (PBTDI) et les polyisocyanates aliphatiques polyfonctionnels, par exemple le DESMODUR® N100 commercialisé par la société Bayer. Les monomères "organiques" peuvent être également des dichlorures d'acide, tels que le dichlorure de téréphtaloyle ou le dichlorure de sébacoyle.

Les monomères "aqueux" (c'est-à-dire hydrosolubles, ou encore solubles dans la phase aqueuse) et qui peuvent être avantageusement utilisés dans le cadre de la présente invention, sont par exemple choisis parmi les alcane-diols, comme le 1,4-butanediol ou le 1,5-pentanediol, les poly(oxydes d'éthylène glycol) (POEG) de diverses masses moléculaires, parmi les alcane-polyols, par exemple les alcane-triols tels que le triméthylolpropane, et parmi les di- ou les poly-amines, par exemple la 1,6-hexaméthylène diamine, la 1,2-éthylènediamine et la tri-(2-aminoéthyl)amine.

Selon les caractéristiques des capsules que l'on souhaite préparer, il peut être avantageux de réaliser une polycondensation entre un ou plusieurs monomères "organiques" et un ou plusieurs monomères "aqueux". Les polycondensats ainsi obtenus seront des copolymères statistiques ou non de deux, trois, quatre ou plus monomères.

Pour les usages de la présente invention, on utilisera avantageusement un monomère "aqueux" de type diamine et un monomère "organique" de type dichlorure d'acide, de manière à former des capsules dont la membrane sera essentiellement constituée de polyamide.

Les réactions de polycondensation entre les monomères M₁ et M₂ définis ci-dessus peuvent éventuellement être accélérées sous l'action d'un ou plusieurs catalyseurs. La nature du catalyseur à employer est fonction de la nature des monomères qui doivent réagir entre eux et sont parfaitement connus de l'homme du métier spécialiste de la synthèse de macromolécules.

Enfin, l'utilisation de co-solvants, que ce soit dans la phase aqueuse ou dans la phase organique n'est pas exclue. De tels co-solvants peuvent être en effet nécessaires pour améliorer la solubilité des monomères dans l'eau ou dans le solvant organique. Le choix de tels co-solvants devra donc être effectué en fonction de la nature des monomères engagés dans la réaction de polycondensation interfaciale, de la nature du ou des agents complexants fonctionnalisés, et des éventuels tensioactifs et catalyseurs présents dans le milieu réactionnel.

La capsule composite ainsi obtenue est constituée d'une membrane polymère résultant de la polycondensation des monomères définis précédemment, c'est-à-dire un polymère polyamide, polyester, polyuréthanne, polyurée, poly(éther-uréthanne) ou poly(éther-uréthanne-urée) ou encore un copolymère de ces polymères, et d'un coeur rempli d'un ou plusieurs monomères polymérisables M_{c}, avantageusement homopolymérisables, de préférence par voie radicalaire, greffés sur un ou plusieurs agents complexants, monomères greffés qui auront été préalablement introduits dans la phase dispersée, éventuellement en présence d'un agent réticulant.

Le monomère greffé sur l'agent complexant et présent dans le coeur de la capsule est de préférence un monomère polymérisable par voie radicalaire. Ce type de polymérisation est préféré par rapport aux réactions de polycondensation pour ne pas interférer avec la polymérisation qui a lieu pour la formation de la membrane.

La polymérisation de ce monomère greffé pourra être effectuée, pendant ou après la formation de la membrane des capsules, *in situ,* selon toute technique connue en soi de l'homme du métier. Ainsi, par exemple, la polymérisation radicalaire de monomères à insaturation vinylique peut être amorcée par léger chauffage du milieu réactionnel, permettant l'activation d'un amorceur de polymérisation radicalaire, tel que par exemple l'acide 4,4'-azobis-(4-cyanovalérique) (ACVA).

La quantité d'agent complexant, sous forme de polymère éventuellement chimiquement réticulé, présent dans le coeur de la capsule dépend principalement de la taille des dites capsules et donc de la taille des gouttelettes dispersées. D'une manière générale, la quantité d'agent complexant dans la phase dispersée sera comprise avantageusement entre 1 % et 99% en poids pour l'obtention de capsules de taille comprise entre 1 µm et 500 µm de diamètre moyen.

À l'issue de la réaction de polycondensation, et de polymérisation du ou des monomères encapsulés, les capsules sont lavées. Pendant cette phase de lavage, l'emploi d'un tensioactif peut s'avérer nécessaire afin d'empêcher l'agglomération des capsules formées.

Les domaines d'applications de telles capsules composites complexantes sont très variés. En effet, la résistance mécanique de la capsule ainsi que la porosité de la membrane permettent, même dans des milieux à forte contrainte, la circulation d'entités chimiques de l'extérieur de la capsule, vers l'intérieur de la capsule et également de l'intérieur vers l'extérieur de la dite capsule.

Le coeur de la capsule renferme un polymère, homopolymère ou copolymère, avantageusement chimiquement réticulé, fonctionnalisé par des agents complexants et/ou décomplexants, lequel polymère empêchant ainsi les dits agents de migrer vers l'extérieur de la capsule. Ainsi, les capsules composites complexantes de l'invention sont par exemple à même de pouvoir complexer et/ou décomplexer spécifiquement des entités chimiques présentes dans un milieu donné.

Une première utilisation pourra ainsi être trouvée dans la dépollution, par exemples de liquides, de sols, etc. par complexation sélective de l'agent polluant. Cet agent polluant sera ainsi retenu à l'intérieur des capsules, qu'il suffira alors de récupérer par tous moyens connus en soi, (par exemple filtration, tamisage). Les applications sont dans ce cas très nombreuses et concernent particulièrement la dépollution de sols, vêtements, liquides, etc., contenant des composés ou éléments radioactifs, ou simplement toxiques.

En outre, les agents complexants encapsulés possèdent généralement des cinétiques de complexation différentes selon la nature des entités chimiques. Les capsules selon l'invention peuvent par conséquent également être utilisées comme moyens de séparations de plusieurs entités chimiques différentes, par exemple des cations métalliques. Les capsules seront dans ce cas utilisées très avantageusement comme éléments de remplissage de colonnes de chromatographies d'élution.

Dans le domaine industriel, les capsules présentent également une alternative aux résines échangeuses d'ions ou aux extractions liquide-liquide. L'extraction permet de séparer différents ions mais également leurs isotopes. Aussi peut-on envisager l'utilisation de ces capsules en vue d'enrichissement isotopique.

En particulier, les éthers-couronne et leurs analogues sont capables de complexer différents cations comme les alcalins et les alcalino-terreux, ceci grâce à leur cavité hydrophile. Des études ont montré que l'éther 18-couronne-6 est susceptible de complexer un cation tel que le strontium. Ainsi, la réalisation de capsules renfermant des ligands capables de complexer sélectivement les métaux alcalins et alcalino-terreux permet la récupération, la purification ou la séparation de ces métaux, en vue soit d'une décontamination radioactive, soit d'un enrichissement isotopique.

Les capsules composites complexantes selon la présente invention, lorsqu'elles sont préparées en l'absence de solvant organique toxique, ou avec un solvant organique gazeux dans les conditions normales de température et de pression, utilisé à l'état liquide ou supercritique, comme le dioxyde de carbone par exemple, et sont constituées d'une membrane polymère biocompatible, présentent l'avantage de pouvoir être utilisées dans les domaines de la thérapeutique humaine ou animale, en cosmétique ou encore dans les domaines agroalimentaire ou phytosanitaire. À titre d'exemple, et de manière non limitative, les capsules pourront ainsi être utilisées comme agent de dépollution du sang.

Enfin, les capsules composites complexantes selon l'invention pourront être utilisées telles quelles ou bien entrer dans la fabrication de produits de complexation et/ou décomplexation et/ou séparation, à usages industriels ou domestiques ou encore dans la fabrication de produits pharmaceutiques, vétérinaires, cosmétologiques, tels que comprimés, gélules, poudres, patches, gels, crèmes, onguents, mais aussi dans la fabrication de produits pour l'imagerie médicale (par exemple agent de contraste) ou de produits textiles, par exemple dans le domaine médical et/ou paramédical et le domaine de la protection civile.

La présente invention est décrite plus en détail dans les exemples particuliers de réalisation qui suivent. Ces exemples ne présentent qu'un caractère purement illustratif et n'ont aucunement pour but de limiter l'invention de quelque manière que ce soit.

### Exemple de synthèse d'un agent complexant porteur d'une fonction polymérisable

### Synthèse de l'acryolyoxyméthyl-18-couronne-6 (Composé A)

Dans un ballon de 250 mL fermé d'un septum cap sont introduits 50 mL de toluène anhydre, qui est dégazé à l'aide d'un bullage d'argon. Puis, 1,308 g (4,43.10⁻³ moles) d'hydroxyméthyl-18-couronne-6 (commercialisé par Aldrich) et 0,49 g (1,1 x 4,43.10⁻³ moles) de triéthylamine distillée sur hydroxyde de potassium sont ajoutés au milieu réactionnel. Le ballon est alors immergé dans un bain de glace, et une agitation est maintenue pendant 1 heure. Lentement et au goutte-à-goutte, à l'aide d'une ampoule à addition, 0,44 g (1,1 x 4,43.10⁻³ moles) de chlorure d'acryloyle sont ajoutés.
Lorsque l'ajout est terminé, l'agitation est maintenue pendant 4 heures à la température de 0°C, puis 16 heures à température ambiante. Ce temps écoulé, l'agitation est arrêtée et le précipité blanc formé (précipité de NEt₃, HCl) est laissé à décanter. La phase limpide est prélevée et filtrée sur du sable. Du toluène anhydre (80 mL) est ajouté au mélange. Après décantation, la phase limpide est à nouveau prélevée et filtrée sur sable. L'opération est répétée 2 fois. Toutes les phases limpides sont alors rassemblées, le solvant est évaporé à l'évaporateur rotatif. Une huile jaune correspondant au produit attendu est obtenue (1,28 g ; 3,45.10⁻³ moles) après passage sur colonne de silice avec du dichlorométhane comme éluant.
Rendement : 78%
RMN ¹H (CDCl₃, référence interne HMDS) δ (ppm) : 3,60-3,72 m 23H ; 4,28 m 2H ; 6,43-5,95 m 3H.

### Exemple de synthèse de capsules complexantes par polycondensation interfaciale

Exemple de préparation par système inverse de capsules de polyamide renfermant un gel polymère de composé (A) chimiquement réticulé.

### Préparation de la phase organique

- Solution 1 : 1 g de tensioactif (HYPERMER® B261 ) dissous dans 1 L de cyclohexane préalablement distillé sur hydrure de calcium.
- Solution 2 : 1,6 g de dichlorure de téréphtaloyle et 0,2 g de trichlorure de téréphtaloyle sont dissous dans 10 mL de chloroforme.

### Préparation de la phase aqueuse

- Solution 3 : sont dissous dans 10 mL d'eau permutée :
   o 1 g (8,61.10⁻³ moles) d'hexaméthylènediamine,
   o 1,444 g (1,72.10⁻² moles) d'hydrogénocarbonate de sodium,
   o 1 g (2,87.10⁻³ moles) de monomère A obtenu comme indiqué précédemment, et
   o 0,044 g (2,85.10⁻⁴ moles) de N,N'-méthylènebisacrylamide (MEBA).
- Solution 4 : sont dissous dans 5 mL d'eau permutée :
   o 0,0403 g (1,44.10⁻⁴ moles) d'acide 4,4'-azobis-(4-cyanovalérique) (ACVA), et
   o 0,0241 g (2,87.10⁻⁴ moles) d'hydrogénocarbonate de sodium.

Les solutions préparées sont d'abord dégazées pendant 1 heure sous un flux d'argon. Le réacteur est également conditionné sous atmosphère d'argon. Puis, 150 mL de phase organique (solution 1) sont introduits dans le réacteur. L'agitation est fixée à 800 tr.min⁻¹. Les deux phases aqueuses (solutions 3 et 4) sont alors mélangées à part dans un bécher, puis ajoutées au milieu réactionnel. Le système d'agitation est stabilisé à 800 tr.min⁻¹ pendant 2 minutes.

La dispersion obtenue, l'agitation est réduite à 200 tr.min⁻¹ et la phase réactive (solution 2) est introduite au goutte-à-goutte (à l'aide d'un pousse-seringue) au sein du milieu réactionnel. Celui-ci est agité à température ambiante pendant 4 heures, tout en maintenant un flux constant d'argon.

Ce temps écoulé, la température du mélange réactionnel est augmentée à 60°C à l'aide d'un bain thermostaté, pendant 3 heures. Le chauffage amorce alors la réaction de polymérisation radicalaire *in situ.* Enfin, le milieu est chauffé à 70°C pendant 1 heure, pour terminer la polymérisation radicalaire. En fin de réaction, une quantité (150 mL) de phase dispersante est ajoutée au mélange, et la réaction de polycondensation est considérée comme stoppée. En fait, la réaction n'est pas vraiment stoppée, mais considérablement ralentie.

Les minicapsules obtenues sont alors filtrées sur papier, puis lavées successivement avec des solutions aqueuses de TWEEN® 20 de concentrations décroissantes (3 x 100 mL à 5 g.L⁻¹, 3 x 100 mL à 2,5 g.L⁻¹ et 3 x 100mL à 1 g.L⁻¹), puis à l'eau permutée (2 x 120 mL).

Les caractéristiques topographiques des capsules complexantes ainsi synthétisées sont déterminées par observation au microscope optique ainsi qu'au microscope électronique à balayage.

Les capsules complexantes présentent des tailles comprises entre 100 µm et 300 µm de diamètre.

### Exemple d'application

### Étude de la conductimétrie

Des études de conductimétrie sur les capsules complexantes permettent d'évaluer les propriétés complexantes du polymère chimiquement réticulé et encapsulé vis-à-vis des ions strontium (Sr⁺⁺). Les capsules complexantes précédemment obtenues sont soumises à une dialyse (pendant 2 jours), réalisée dans un bac d'eau permutée, l'eau étant renouvelée régulièrement.
Pour mener à bien cette étude, une solution aqueuse de dichlorure de strontium de concentration connue est préparée, de telle sorte qu'elle soit dans le rapport suivant : 3 moles de strontium pour 1 mole de monomère (Composé A).
La mesure du blanc s'effectue à l'aide de la solution de strontium de concentration connue.

L'électrode mesure la conductivité d'un volume donné (V=12 cm³) au temps t = 0. Une fois la conductivité stabilisée, la solution est diluée avec un volume V = 1,5 mL de capsules de référence (capsules à membrane polyamide renfermant uniquement de l'eau). Les variations de la conductivité de cette solution sont enregistrées puis traitées sur une durée de 30 minutes (1 mesure par seconde).

La même expérience est reproduite, en utilisant cette fois-ci un volume V = 1,5 mL de capsules complexantes obtenues précédemment (capsules à membrane polyamide contenant le gel polymère chimiquement réticulé du composé (A)) : l'électrode est immergée dans 12 cm³ de la solution aqueuse de dichlorure de strontium de concentration connue, à t = 0. Les capsules sont ajoutées, et la conductivité de la solution mesurée pour une durée de 30 minutes (1 mesure par seconde).

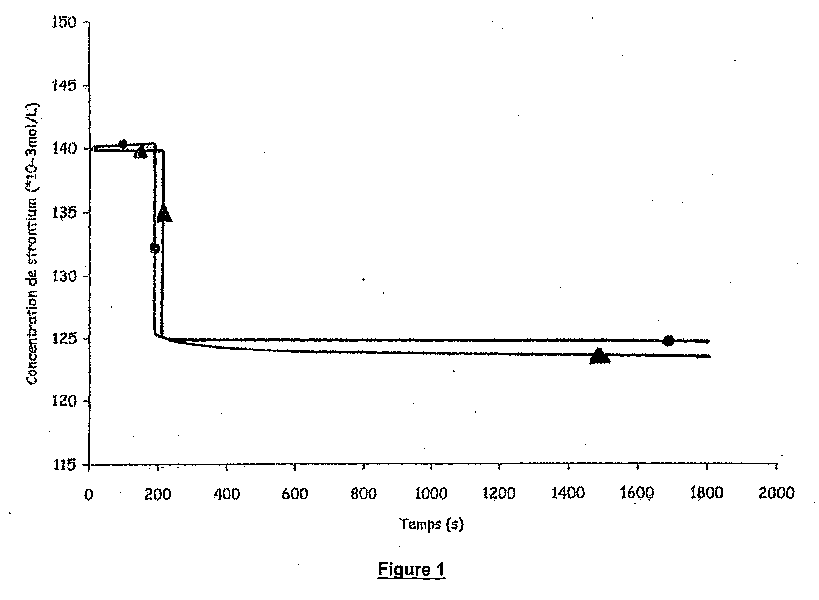

La Figure 1 présente le résultat de cette étude de conductimétrie (exprimée en concentration de strontium en fonction du temps) réalisée avec des capsules de référence (●) et les capsules complexantes (▲) :
1- avant l'ajout des capsules (t < 180 s), la concentration en ions strontium est de 140 mmol/L (140,1 mmol/L pour les capsules de référence et 139,8 mmol/L pour les capsules complexantes) avec une erreur de mesure de 0,3 mmol/L (précision du conductimètre 0,2%) ;
2- après l'ajout des capsules, la concentration en ions strontium dans la solution chute (125,3 mmol/L pour les capsules de référence et 123,5 mmol/L pour les capsules complexantes)

La variation de concentration en ions strontium dans la solution contenant les capsules complexantes de l'invention (16,3 mmol/L) est supérieure à celle observée pour la solution contenant les capsules de référence (14,8 mmol/L). Ceci est dû au fait que les capsules complexantes ont effectivement complexé une partie des ions strontium qui ne sont alors plus détectables par l'électrode, d'où une concentration résiduelle en strontium plus faible. La variation due à la complexation, même si elle est faible (1,5 mmol/L), est significative car supérieure à l'erreur de mesure (0,3 mmol/L).

## Revendications

1. Capsules composites complexantes, **caractérisées en ce qu'**elles sont essentiellement constituées :
a) d'un coeur comprenant des agents aptes à complexer et/ou décomplexer des entités chimiques, les dits agents étant fonctionnalisés par un ou plusieurs monomères ayant subi une polymérisation ; et
b) d'une membrane polymère formée par polycondensation d'au moins deux monomères, la dite membrane renfermant le dit coeur et étant perméable aux dites entités chimiques.

2. Capsules selon la revendication 1, **caractérisées en ce que** leur diamètre est compris entre quelques nanomètres et quelques millimètres, de préférence entre environ 1 µm et environ 500 µm, de préférence encore entre 100 µm et 300 µm.

3. Capsules selon l'une des revendications précédentes, **caractérisées en ce que** leur membrane est un polymère polyamide, polyester, polyurée, polyuréthanne, poly(éther-uréthanne) et poly(éther-uréthanne-urée) ou un de leurs copolymères.

4. Capsules selon l'une des revendications précédentes, **caractérisées en ce que** les agents aptes à complexer et/ou décomplexer des entités chimiques sont choisis parmi les ligands complexants neutres ou ioniques, de préférence parmi les coronands, les cryptands et les pondands, fonctionnalisés par au moins un monomère.

5. Capsules selon l'une quelconque des revendications précédentes, **caractérisées en ce que** l'agent complexant est un éther-couronne, de préférence l'éther-couronne 18-C-6, fonctionnalisé par au moins un monomère.

6. Capsules selon l'une quelconque des revendications précédentes, **caractérisées en ce que** le coeur comprend un polymère complexant résultant de la polymérisation radicalaire d'agent complexants fonctionnalisés par au moins un monomère comportant au moins une insaturation, de préférence une insaturation vinylique.

7. Capsules selon l'une quelconque des revendications précédentes, **caractérisées en ce que** le coeur comprend un polymère complexant chimiquement réticulé, résultant de la polymérisation radicalaire d'agent complexants fonctionnalisés par au moins un monomère comportant au moins une insaturation, et de la réticulation du produit de la dite polymérisation.

8. Capsules selon l'une quelconque des revendications précédentes, **caractérisées en ce que** l'agent complexant est fonctionnalisé par au moins un monomère comportant au moins une insaturation vinylique et au moins un groupement hydrophile.

9. Capsules selon l'une quelconque des revendications précédentes, **caractérisées en ce que** l'agent complexant est fonctionnalisé par l'espèce monomère acryloyloxyméthyle.

10. Capsules selon l'une quelconque des revendications précédentes, **caractérisées en ce que** l'agent complexant est l'acryloyloxyméthyl-18-couronne-6.

11. Capsules selon l'une des revendications précédentes, **caractérisées en ce qu'**elles sont obtenues par polycondensation interfaciale en milieu dispersé.

12. Procédé de préparation des capsules composites complexantes selon l'une des revendications précédentes, **caractérisé en ce qu'**il comprend les étapes suivantes :
- préparer sous agitation une dispersion stabilisée d'une phase P₁ comprenant une solution, dans au moins un solvant S₁, d'au moins un monomère M₁ et d'au moins un monomère M_{c} greffé sur au moins un agent complexant, éventuellement en présence d'un agent de réticulation, dans une phase P₂, comprenant au moins un solvant S₂ substantiellement non miscible dans P₁ et éventuellement un tensioactif compatible avec S₁ et S₂;
- ajouter le monomère M₂ miscible dans S₂ à cette dispersion stabilisée pour réaliser la polycondensation interfaciale et former des capsules renfermant le monomère greffé sur au moins un agent complexant ;
- réaliser la polymérisation du ou des monomères M_{c} fonctionnalisant au moins un agent complexant pour obtenir un polymère complexant, éventuellement soumis à réticulation, de manière à obtenir un polymère complexant chimiquement réticulé et encapsulé ;
- isoler les capsules composites complexantes ainsi obtenues.

13. Procédé de préparation de capsules composites complexantes, **caractérisé en ce qu'**il comprend les étapes suivantes :
- préparer sous agitation une dispersion stabilisée d'une phase P₁ comprenant une solution, dans au moins un solvant S₁, d'au moins un monomère M₁ et d'au moins un monomère M_{c} greffé sur au moins un agent complexant, éventuellement en présence d'un agent de réticulation, dans une phase P₂, comprenant au moins un solvant S₂ substantiellement non miscible dans P₁, le monomère M₂ miscible dans S₂, et éventuellement un tensioactif compatible avec S₁ et S₂;
- réaliser la polycondensation interfaciale et simultanément la polymérisation radicalaire du ou des monomères M_{c} fonctionnalisant au moins un agent complexant, et éventuellement réticulation, pour obtenir un polymère complexant chimiquement réticulé et encapsulé ;
- isoler les capsules composites complexantes ainsi obtenues.

14. Procédé selon la revendication 12 ou la revendication 13, **caractérisé en ce que** le rapport volumique entre la phase P₁ et la phase P₂, c'est-à-dire entre la phase dispersée et la phase dispersante est compris entre 20/1 et 1/20, de préférence entre 10/1 et 1/10.

15. Procédé selon l'une quelconque des revendications 12 à 14, **caractérisé en ce que** la phase dispersante comprend un agent tensioactif.

16. Procédé selon l'une quelconque des revendications 12 à 15, **caractérisé en ce que** la phase P₁ est la phase aqueuse dispersée dans la phase organique P₂.

17. Procédé selon l'une quelconque des revendications 12 à 15, **caractérisé en ce que** la phase P₁ est la phase organique dispersée dans la phase aqueuse P₂.

18. Procédé selon l'une quelconque des revendications 12 à 17, **caractérisé en ce que** le solvant de la phase organique est choisi parmi les solvants organiques usuels, tels que le toluène, le cyclohexane, le tétrachlorure de carbone, le chloroforme et les solvants gazeux qui peuvent être amenés à l'état liquide et/ou supercritque pendant la réaction de polycondensation interfaciale.

19. Procédé selon la revendication 18, **caractérisé en ce que** le solvant de la phase organique est le dioxyde de carbone à l'état liquide et/ou supercritique.

20. Procédé selon l'une quelconque des revendications 12 à 19, **caractérisé en ce que** les monomères M₁ et M₂ sont des monomères au moins bi-fonctionnels choisis parmi les diols et les diamines pour les monomères hydrophiles et les dichlorures d'acide, les diisocyanates et les polyéthers fonctionnalisés en diisocyanate pour les monomères lipophiles.

21. Procédé selon l'une quelconque des revendications 12 à 20, **caractérisé en ce que** la polymérisation et éventuellement la réticulation du monomère M_{c} fonctionnalisant au moins un agent complexant est une réaction de polymérisation radicalaire.

22. Utilisation des capsules composites complexantes selon l'une quelconque des revendications 1 à 11 comme agents de complexation et/ou décomplexation sélective d'entités chimiques.

23. Utilisation selon la revendication 21 pour la dépollution des sols et des liquides, contaminés par des composés ou éléments toxiques ou radioactifs.

24. Utilisation selon la revendication 21 pour les séparations de plusieurs entités chimiques différentes, par exemple des cations métalliques.

25. Utilisation selon la revendication 21 comme alternative aux résines échangeuses d'ions ou aux extractions liquide-liquide pour la séparation ou l'extraction d'ions métalliques, ou encore pour l'enrichissement isotopique.

26. Utilisation selon la revendication 21 de capsules composites complexantes biocompatibles dans les domaines de la thérapeutique humaine ou animale, la cosmétique, l'agroalimentaire et le phytosanitaire.

27. Produit de complexation et/ou décomplexation et/ou séparation comprenant des capsules composites complexantes telles que définies dans l'une quelconque des revendications 1 à 11.

## Claims

1. Complexing composite capsules, **characterised in that** they are essentially composed of :
a) a core comprising agents capable of complexing and/or decomplexing chemical entities, said agents being functionalised by one more monomers that have been subjected to polymerisation; and
b) a polymer membrane formed by polycondensation of at least two monomers, said membrane containing said core and being permeable to said chemical entities.

2. Capsules according to claim 1, **characterised in that** their diameter is between a few nanometers and a few millimetres, preferably between about 1 µm and about 500 µm, more preferably between 100 µm and 300 µm.

3. Capsules according to any one of the preceding claims, **characterised in that** their membrane is a polyamide, polyester, polyurea, polyurethane, poly(ether/urethane) or poly(ether/urethane/urea) polymer or a copolymer thereof.

4. Capsules according to any one of the preceding claims, **characterised in that** the agents capable of complexing and/or decomplexing chemical entities are selected from neutral or ionic complexing ligands, preferably from coronands, cryptands and pondands, functionalised by at least one monomer.

5. Capsules according to any one of the preceding claims, **characterised in that** the complexing agent is a crown ether, preferably the crown ether 18-C-6, functionalised by at least one monomer.

6. Capsules according to any one of the preceding claims, **characterised in that** the core comprises a complexing polymer resulting from the free-radical polymerisation of complexing agents functionalised by at least one monomer that comprises at least one unsaturation, preferably a vinyl unsaturation.

7. Capsules according to any one of the preceding claims, **characterised in that** the core comprises a chemically crosslinked complexing polymer obtained by the free-radical polymerisation of complexing agents functionalised by at least one monomer that comprises at least one unsaturation, and by crosslinking the product of said polymerisation.

8. Capsules according to any one of the preceding claims, **characterised in that** the complexing agent is functionalised by at least one monomer that comprises at least one vinyl unsaturation and at least one hydrophilic group.

9. Capsules according to any one of the preceding claims, **characterised in that** the complexing agent is functionalised by the monomer species acryloyloxymethyl.

10. Capsules according to any one of the preceding claims, **characterised in that** the complexing agent is acryloyloxymethyl-18-crown-6.

11. Capsules according to any one of the preceding claims, **characterised in that** they are obtained by interfacial polycondensation in disperse medium.

12. Process for the preparation of complexing composite capsules according to any one of the preceding claims, **characterised in that** it comprises the following steps :
- preparing, with stirring, a stabilised dispersion of a phase P₁ comprising a solution, in at least one solvent S₁, of at least one monomer M₁ and of at least one monomer M_{c} grafted onto at least one complexing agent, optionally in the presence of a crosslinking agent, in a phase P₂ comprising at least one solvent S₂ that is substantially non-miscible in P₁ and, optionally, a surfactant compatible with S₁ and S₂;
- adding a monomer M₂ miscible in S₂ to that stabilised dispersion in order to effect interfacial polycondensation and form capsules containing the monomer grafted onto at least one complexing agent;
- carrying out the polymerisation of the monomer or monomers M_{c} functionalising at least one complexing agent in order to obtain a complexing polymer, optionally subjected to crosslinking, so as to obtain a chemically crosslinked and encapsulated complexing polymer;
- isolating the complexing composite capsules so obtained.

13. Process for the preparation of complexing composite capsules, **characterised in that** it comprises the following steps:
- preparing, with stirring, a stabilised dispersion of a phase P₁ comprising a solution, in at least one solvent S₁, of at least one monomer M₁ and of at least one monomer M_{c} grafted onto at least one complexing agent, optionally in the presence of a crosslinking agent, in a phase P₂ comprising at least one solvent S₂ that is substantially non-miscible in P₁, a monomer M₂ miscible in S₂ and, optionally, a surfactant compatible with S₁ and S₂;
- carrying out the interfacial polycondensation and simultaneously the free-radical polymerisation of the monomer or monomers M_{c} functionalising at least one complexing agent and, optionally, crosslinking, in order to obtain a chemically crosslinked and encapsulated complexing polymer;
- isolating the complexing composite capsules so obtained.

14. Process according to claim 12 or claim 13, **characterised in that** the ratio by volume between phase P₁ and phase P₂, that is, between the dispersed phase and the dispersing phase, is between 20/1 and 1/20, preferably between 10/1 and 1/10.

15. Process according to any one of claims 12 to 14, **characterised in that** the dispersing phase comprises a surfactant.

16. Process according to any one of claims 12 to 15, **characterised in that** phase P₁ is an aqueous phase dispersed in an organic phase P₂.

17. Process according to any one of claims 12 to 15, **characterised in that** phase P₁ is an organic phase dispersed in an aqueous phase P₂.

18. Process according to any one of claims 12 to 17, **characterised in that** the solvent of the organic phase is selected from customary organic solvents, such as toluene, cyclohexane, carbon tetrachloride, chloroform and gaseous solvents that can be brought into the liquid and/or supercritical state during the interfacial polycondensation reaction.

19. Process according to claim 18, **characterised in that** the solvent of the organic phase is carbon dioxide in the liquid and/or supercritical state.

20. Process according to any one of claims 12 to 19, **characterised in that** the monomers M₁ and M₂ are at least bifunctional monomers selected from diols and diamines for hydrophilic monomers and acid dichlorides, diisocyanates and polyethers functionalised with diisocyanate for lipophilic monomers.

21. Process according to any one of claims 12 to 20, **characterised in that** the polymerisation and optionally the crosslinking of the monomer M_{c} functionalising at least one complexing agent is a free-radical polymerisation reaction.

22. Use of the complexing composite capsules according to any one of claims 1 to 11 as selective complexing and/or decomplexing agents for chemical entities.

23. Use according to claim 21 for the depollution of ground and liquid contaminated by toxic or radioactive compounds or elements.

24. Use according to claim 21 for the separation of a plurality of different chemical entities, for example metal cations.

25. Use according to claim 21 as an alternative to ion exchange resins or to liquid-liquid extractions for the separation or extraction of metal ions, or for isotopic enrichment.

26. Use according to claim 21 of biocompatible complexing composite capsules in the fields of human or animal therapeutics, cosmetics, agribusiness and plant sanitation.

27. Complexing and/or decomplexing and/or separating product comprising complexing composite capsules as defined in any one of claims 1 to 11.

## Patentansprüche

1. Komplexierende Verbundkapseln, **dadurch gekennzeichnet, dass** sie im Wesentlichen aus:
a) einem Kern, der Mittel umfasst, die in der Lage sind, chemische Entitäten zu komplexieren und/oder zu dekomplexieren und welche durch ein oder mehrere Monomere, die einer Polymerisation unterworfen wurden, funktionalisiert sind, und
b) einer polymeren Membran, die durch Polykondensation von mindestens zwei Monomeren gebildet ist, den Kern umschließt und für diese chemischen Entitäten durchlässig ist,
bestehen.

2. Kapseln nach Anspruch 1, **dadurch gekennzeichnet, dass** ihr Durchmesser einige Nanometer bis einige Millimeter, vorzugsweise zwischen etwa 1 µm und etwa 500 µm, und besonders bevorzugt zwischen 100 µm und 300 µm beträgt.

3. Kapseln nach einem der vorhergehenden Ansprüche, **dadurch gekennzeichnet, dass** ihre Membran aus einem Polyamid-, Polyester-, Polyharnstoff-, Polyurethan-, Polyetherurethan- und Polyetherurethanharnstoff-Polymer oder einem von deren Copolymeren besteht.

4. Kapseln nach einem der vorhergehenden Ansprüche, **dadurch gekennzeichnet, dass** die Mittel, die in der Lage sind, chemische Entitäten zu komplexieren und/oder zu dekomplexieren, aus neutralen oder ionischen komplexierenden Liganden, vorzugsweise aus Coronanden, Kryptanden und Podanden, die durch mindestens ein Monomer funktionalisiert sind, ausgewählt sind.

5. Kapseln nach einem der vorhergehenden Ansprüche, **dadurch gekennzeichnet, dass** das Komplexierungsmittel ein Kronenether und vorzugsweise der Kronenether 18-C-6, der durch mindestens ein Monomer funktionalisiert ist, ist.

6. Kapseln nach einem der vorhergehenden Ansprüche, **dadurch gekennzeichnet, dass** der Kern ein komplexierendes Polymer umfasst, das aus der radikalischen Polymerisation von Komplexierungsmitteln resultiert, die durch wenigstens ein Monomer funktionalisiert sind, das mindestens eine Ungesättigtheit, vorzugsweise eine vinylische Ungesättigtheit, enthält.

7. Kapseln nach einem der vorhergehenden Ansprüche, **dadurch gekennzeichnet, dass** der Kern ein chemisch vernetztes komplexierendes Polymer umfasst, das aus der radikalischen Polymerisation von Komplexierungsmitteln, die durch wenigstens ein Monomer funktionalisiert sind, das mindestens eine Ungesättigtheit enthält, und der Vernetzung des Produkts dieser Polymerisation resultiert.

8. Kapseln nach einem der vorhergehenden Ansprüche, **dadurch gekennzeichnet, dass** das Komplexierungsmittel durch wenigstens ein Monomer funktionalisiert ist, das mindestens eine vinylische Ungesättigtheit und mindestens eine hydrophile Gruppe enthält.

9. Kapseln nach einem der vorhergehenden Ansprüche, **dadurch gekennzeichnet, dass** das Komplexierungsmittel durch die monomere Acryloyloxymethyl-Spezies funktionalisiert ist.

10. Kapseln nach einem der vorhergehenden Ansprüche, **dadurch gekennzeichnet, dass** das Komplexierungsmittel Acryloyloxymethyl-18-Krone-6 ist.

11. Kapseln nach einem der vorhergehenden Ansprüche, **dadurch gekennzeichnet, dass** sie durch Grenzflächen-Polykondensation in einem dispergierten Medium erhalten worden sind.

12. Verfahren zur Herstellung von komplexierenden Verbundkapseln nach einem der vorhergehenden Ansprüche, **dadurch gekennzeichnet, dass** es die Stufen:
- Herstellen einer stabilisierten Dispersion einer Phase P₁, die eine Lösung mindestens eines Monomers M₁ und mindestens eines Monomers M_{c}, das auf mindestens ein Komplexierungsmittel aufgepfropft ist, in mindestens einem Lösungsmittel S₁ umfasst, gegebenenfalls in Gegenwart eines Vernetzungsmittels, in einer Phase P₂, die mindestens ein Lösungsmittel S₂, das im Wesentlichen mit P₁ unmischbar ist, und gegebenenfalls ein mit S₁ und S₂ verträgliches Tensid umfasst, unter Rühren,
- Zugeben des in S₂ mischbaren Monomers M₂ zu dieser stabilisierten Dispersion, um die Grenzflächen-Polykondensation durchzuführen und Kapseln zu bilden, die das auf mindestens ein Komplexierungsmittel aufgepfropfte Monomer einschließen,
- Polymerisieren des (der) Monomeren M_{c}, die durch mindestens ein Komplexierungsmittel funktionalisiert sind, um ein komplexierendes Polymer zu erhalten, das gegebenenfalls derart vernetzt wird, dass ein chemisch vernetztes und umkapseltes komplexierendes Polymer erhalten wird, und
- Abtrennen der so erhaltenen komplexierenden Verbundkapseln
umfasst.

13. Verfahren zur Herstellung von komplexierenden Verbundkapseln, **dadurch gekennzeichnet, dass** es die Stufen:
- Herstellen einer stabilisierten Dispersion einer Phase P₁, die eine Lösung mindestens eines Monomers M₁ und mindestens eines Monomers M_{c}, das auf mindestens ein Komplexierungsmittel aufgepfropft ist, in mindestens einem Lösungsmittel S₁ umfasst, gegebenenfalls in Gegenwart eines Vernetzungsmittels, in einer Phase P₂, die mindestens ein Lösungsmittel S₂, das im Wesentlichen mit P₁ unmischbar ist, das mit S₂ mischbare Monomer M₂ und gegebenenfalls ein mit S₁ und S₂ verträgliches Tensid umfasst, unter Rühren,
- Grenzflächen-Polykondensation und gleichzeitige radikalische Polymerisation des (der) Monomeren M_{c}, die mindestens ein Komplexierungsmittel funktionalisieren, und gegebenenfalls Vernetzung, um ein chemisch vernetztes und umkapseltes komplexierendes Polymer zu erhalten, und
- Abtrennen der so erhaltenen komplexierenden Verbundkapseln
umfasst.

14. Verfahren nach Anspruch 12 oder 13, **dadurch gekennzeichnet, dass** das Volumenverhältnis von Phase P₁ zu Phase P₂, das heißt der dispergierten zu der Dispersionsphase, 20/1 bis 1/20 und vorzugsweise zwischen 10/1 und 1/10 beträgt.

15. Verfahren nach einem der Ansprüche 12 bis 14, **dadurch gekennzeichnet, dass** die Dispersionsphase ein Tensid enthält.

16. Verfahren nach einem der Ansprüche 12 bis 15, **dadurch gekennzeichnet, dass** die Phase P₁ die wässrige Phase ist, die in der organischen Phase P₂ dispergiert ist.

17. Verfahren nach einem der Ansprüche 12 bis 15, **dadurch gekennzeichnet, dass** die Phase P₁ die organische Phase ist, die in der wässrigen Phase P₂ dispergiert ist.

18. Verfahren nach einem der Ansprüche 12 bis 17, **dadurch gekennzeichnet, dass** das Lösungsmittel der organischen Phase aus üblichen organischen Lösungsmitteln wie Toluol, Cyclohexan, Tetrachlormethan und Chloroform und gasförmigen Lösungsmitteln, die in den flüssigen und/oder überkritschen Zustand während der Grenzflächen-Polykondensation gebracht werden können, ausgewählt ist.

19. Verfahren nach Anspruch 18, **dadurch gekennzeichnet, dass** das Lösungsmittel der organischen Phase Kohlendioxid im flüssigen und/oder überkritischen Zustand ist.

20. Verfahren nach einem der Ansprüche 12 bis 19, **dadurch gekennzeichnet, dass** die Monomere M₁ und M₂ wenigstens bifunktionelle Monomere sind, die aus Diolen und Diaminen für die hydrophilen Monomeren und aus Säuredichloriden, Diisocyanaten und zu Diisocyanat funktionalisierten Polyethern für die lipophilen Monomeren ausgewählt sind.

21. Verfahren nach einem der Ansprüche 12 bis 20, **dadurch gekennzeichnet, dass** die Polymerisation und gegebenenfalls die Vernetzung des Monomers M_{c}, das mindestens ein Komplexierungsmittel funktionalisiert, eine radikalische Polymerisation ist.

22. Verwendung von komplexierenden Verbundkapseln nach einem der Ansprüche 1 bis 11 als Komplexierungs- und/oder Dekomplexierungsmittel, die für chemische Entitäten selektiv sind.

23. Verwendung nach Anspruch 21 zur Reinigung von Solen und Flüssigkeiten, die durch toxische oder radioaktive Verbindungen bzw. Elemente verunreinigt sind.

24. Verwendung nach Anspruch 21 zur Auftrennung mehrerer unterschiedlicher chemischer Entitäten, beispielsweise metallischer Kationen.

25. Verwendung nach Anspruch 21 als Alternative zu Ionenaustauscherharzen oder flüssig/flüssig-Extraktionen zur Auftrennung oder Extraktion von Metallionen oder auch zur Isotopenanreicherung.

26. Verwendung nach Anspruch 21 von biologisch verträglichen komplexierenden Verbundkapseln auf den Gebieten der Therapie von Mensch oder Tier, von Kosmetik, Ernährungswirtschaft und Pflanzenschutz.

27. Komplexierungs- und/oder Dekomplexierungs- und/oder Trennmittel, das komplexierende Verbundkapseln wie in einem der Ansprüche 1 bis 11 definiert umfasst.
